# FASCICULE DE BREVET EUROPEEN

(11) **EP 3 432 222 B1**
(45) Date de publication et mention de la délivrance du brevet: **06.10.2021**
(21) Numéro de dépôt: 18305970.8
(22) Date de dépôt: 17.07.2018
(51) Int. Cl.: G06K 19/07, G06K 19/077

(54) **CARTE ÉLECTRONIQUE COMPRENANT UN CAPTEUR D'EMPREINTE ET UNE MARQUE TACTILE**
ELEKTRONISCHE KARTE, DIE EINEN FINGERABDRUCKSENSOR UND EINE TAKTILE MARKIERUNG UMFASST
ELECTRONIC CARD COMPRISING A FINGERPRINT SENSOR AND A TACTILE FEATURE

(30) Priorité: 17.07.2017 FR 1756766
(43) Date de publication de la demande: 23.01.2019
(73) Titulaire: Idemia Identity & Security France, 92400 Courbevoie (FR)
(72) Inventeur: BERTIAUX, Philippe, 92130 ISSY LES MOULINEAUX (FR); POMPEANI, Sylvie, 92130 ISSY LES MOULINEAUX (FR); GERMAIN, François, 92130 ISSY LES MOULINEAUX (FR)
(74) Mandataire: Regimbeau

(56) Documents cités:
- WO-A1-2014/053717
- DE-A1- 19 921 231
- US-A1- 2005 139 685
- US-A1- 2009 153 297
- US-A1- 2016 140 379

## Description

### DOMAINE TECHNIQUE GENERAL

L'invention concerne le domaine des cartes électroniques ainsi que la fabrication de telles cartes. Et l'invention concerne plus particulièrement les cartes électroniques comprenant un capteur d'empreinte au format spécifié dans le standard ISO 7810 ID1.

### ETAT DE LA TECHNIQUE

Sur les cartes électroniques, comprenant un capteur d'empreinte, au format « carte à puce » spécifié dans les standards ISO 7810 ID1 et 7816, les utilisateurs ont tendance à positionner leur doigt sur le bord du capteur au lieu de centrer le doigt avec le capteur.

Aussi, il existe un problème au positionnent du doigt sur le capteur d'empreinte compte tenu de la faible surface disponible sur une carte de type « carte à puce ».

Pour permettre un positionnement correct du doigt, classiquement, une marque visuelle est ajoutée sur la carte pour que l'utilisateur sache où positionner son doigt.

Toutefois, une simple marque visuelle n'est pas suffisante. En effet, il a été constaté que les utilisateurs avaient encore du mal à aligner leur doigt avec le capteur.

De plus, les utilisateurs ayant de longs ongles ne pouvaient également pas bien distinguer la limite visuelle avec laquelle ils devaient aligner l'extrémité de la peau du doigt.

Les demandes de brevet américaines US2009/0153297 A1 et US2005/0139685 A1 ainsi que la demande de brevet allemande DE19921231 A1 décrivent des cartes électroniques comprenant un capteur d'empreintes digitales.

### PRESENTATION DE L'INVENTION

L'invention permet de pallier les inconvénients pré-cités.

A cet effet, l'invention propose une carte électronique selon la revendication 1.

L'invention est avantageusement complétée par les caractéristiques suivantes, prises seules ou en une quelconque de leur combinaison techniquement possible.

La marque tactile est définie par deux arcs de cercle l'un dans l'autre joints à leurs extrémités par des segments de droite.

La marque tactile est en forme de croissant de lune.

La marque tactile est définie par un demi-cercle accolé au capteur d'empreinte.

La marque tactile est définie par un U englobant le capteur d'empreinte.

La marque tactile est définie par l'image d'une empreinte digitale disposée autour du capteur d'empreinte.

La carte comprend en outre une marque d'alignement visible à l'œil nu définissant une position de l'extrémité du doigt de l'utilisateur sur la surface supérieure du corps de carte, la marque d'alignement étant typiquement un arc de cercle ouvert vers le capteur d'empreinte.

Le corps de carte ayant été obtenu par lamination de plusieurs couches entre elles, la marque tactile étant obtenue par impression d'un vernis sur la surface supérieure du corps de carte, au moyen d'un procédé de sérigraphie suivit par une étape de cuisson du corps de carte et de la marque tactile

Le corps de carte ayant été obtenu par lamination de plusieurs couches entre elles, la marque tactile étant ajoutée par gravure, au moyen d'un laser, de la surface supérieure du corps de carte.

La marque tactile est obtenue simultanément au corps de carte par lamination de plusieurs couches entre elles entre, des plaques de lamination étant gravées du motif définissant la marque tactile.

Le fait d'avoir une marque en relief sur le corps de carte permet de guider l'utilisateur. Ainsi, intuitivement il pourra positionner correctement son doigt.

Selon les positions de la marque, il peut s'agir soit d'une butée pour indiquer le début ou la fin du capteur d'empreinte à partir du bord du corps de carte.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre une vue de dessus d'une carte électronique selon un premier mode de réalisation de l'invention ;
- la figure 2 illustre une vue de profil de la carte électronique de la figure 1 ;
- la figure 3 illustre une vue de dessus d'une carte électronique selon un second mode de réalisation de l'invention ;
- la figure 4 illustre une vue de dessus d'une carte électronique selon un troisième mode de réalisation de l'invention ;
- la figure 5 illustre une vue de dessus d'une carte électronique selon un quatrième mode de réalisation de l'invention ;
- la figure 6 illustre une vue de dessus d'une carte électronique selon un cinquième mode de réalisation de l'invention ;
- la figure 7 illustre une vue de dessus d'une carte électronique selon un sixième mode de réalisation de l'invention ;
- la figure 8 illustre une vue de dessus d'une carte électronique selon un septième mode de réalisation.

Sur l'ensemble des figures les éléments similaires portent des références identiques.

### DESCRIPTION DETAILLEE DE L'INVENTION

Les figures illustrent une carte électronique comprenant un corps 1 de carte et un capteur 2 d'empreinte.

Le corps 1 de carte comprend une surface supérieure 11 et une surface inférieure 12 et présente des dimensions conformes au standard ISO 7810 ID1. En particulier, le corps 1 de carte présente une épaisseur comprise entre 780 et 840 µm.

Le corps 1 de carte comprend plusieurs couches assemblées entre elles au moyen d'un procédé de lamination à chaud de manière à satisfaire les contraintes, de tenue des couches entre elles, du standard ISO 7810 ID1.

Le capteur 2 d'empreinte affleure la surface supérieure 11 du corps 1 de carte et est configuré pour acquérir l'image d'une empreinte d'un utilisateur et pour vérifier l'identité du porteur de la carte électronique. La surface 11 supérieure du corps de carte est en matière plastique.

Le capteur 2 d'empreinte comprend un substrat 22 semi-conducteur qui peut être flexible ou rigide. Dans tous les cas on s'assure qu'il s'intègre dans un corps de carte selon les contraintes du standard ISO 7810 ID1.

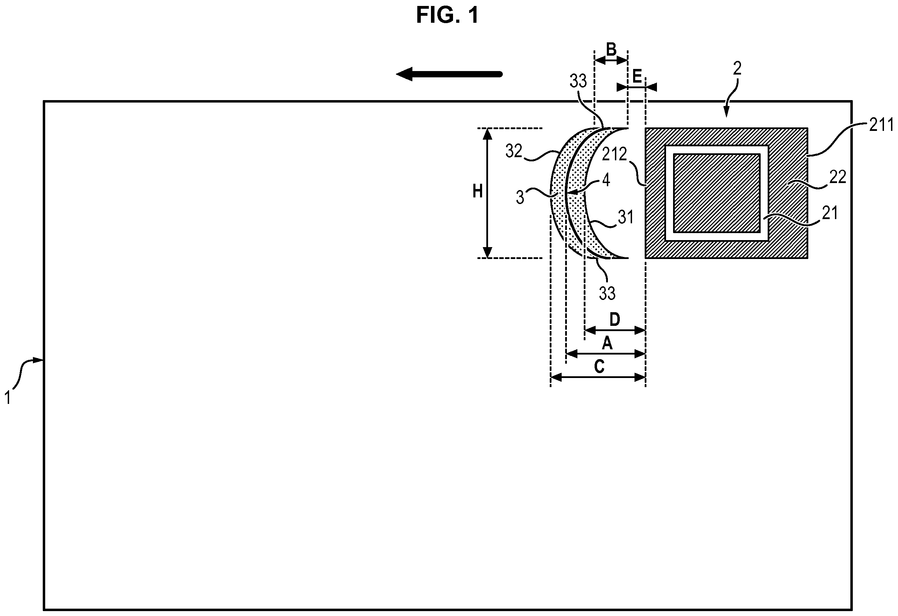

Le capteur 2 d'empreinte est rectangulaire et présente un premier bord 211 et un second bord 212 pris dans le sens de positionnement du doigt (flèche sur la figure 1), ces bords sont pris sur des largeurs du capteur 2 d'empreinte.

Une partie de ce substrat 22 constitue la partie active 21 du capteur 2 d'empreinte sur laquelle le porteur va poser son doigt pour que l'image de son empreinte soit acquise.

Le reste du substrat 22 permet l'assemblage du capteur 2 d'empreinte sur la carte.

Le substrat 22 du capteur 2 d'empreinte peut être flexible ou bien rigide.

De manière avantageuse, la carte comprend sur sa face supérieure une marque 3 tactile.

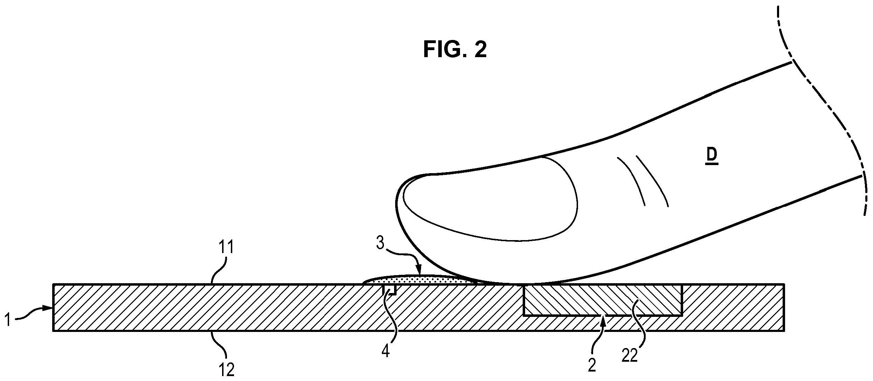

Cette marque 3 permet à un utilisateur de positionner correctement son doigt D sur le capteur 2 d'empreinte **(****figure 2**).

En particulier, la marque 3 tactile présente une surépaisseur sur la surface supérieure de la carte. L'épaisseur de la marque 3 tactile est comprise entre 30 et 60 µm, typiquement 50 µm.

De manière plus générale, l'épaisseur de la marque 3 tactile est telle que le corps 1 de carte et la marque 3, ensembles, ont une épaisseur compatible avec le standard ISO 7810 ID1.

Ainsi, la marque 3 tactile présente, au touché, une rugosité différente de celle du corps de carte et est avantageusement invisible à l'œil nu : l'utilisateur sent au moyen de son doigt un relief.

De manière complémentaire, une marque 4 d'alignement - visible à l'œil nu - permet d'indiquer la position 4 de l'extrémité du doigt de l'utilisateur et est typiquement une portion de cercle représentant l'extrémité d'un doigt.

La marque tactile 3 avec éventuellement la marque d'alignement 4 sont toujours disposées à proximité du capteur d'empreinte mais de différentes manières.

Cette marque d'alignement offre une aide supplémentaire au positionnement du doigt sur le capteur d'empreinte.

Selon un premier mode de réalisation illustré sur **la** **figure 1**, la marque 4 tactile est disposée de telle sorte que le doigt est correctement positionné lorsqu'au touché, l'utilisateur commence à détecter la présence de la marque tactile.

En particulier, la marque 3 tactile comprend deux arcs de cercle, identiques, l'un dans l'autre : un arc de cercle interne 31 et un arc de cercle 32 externe.

Ces deux arcs de cercle sont connectés à leurs extrémités par des segments de droite 33 longitudinaux parallèles au sens de positionnement du doigt sur le capteur d'empreinte. Les deux arcs de cercle sont l'un dans l'autre et sont ouverts vers le capteur 2 d'empreinte.

Les arcs de cercles 31 interne et externe 32 ainsi que les segments de droite 33 délimitent la forme marque tactile.

La hauteur de la marque 3 tactile est identique à celle de la largeur du capteur 2 d'empreinte (dimension H sur la figure 1). Le milieu de l'arc de cercle interne est situé entre 4 et 6 mm, typiquement 5 mm du bord du capteur d'empreinte (dimension D sur la figure 1). Le milieu de l'arc de cercle externe est situé entre 9 et 12 mm, typiquement 11 mm du bord du capteur 1 d'empreinte (dimension C sur la figure 1).

Les segments de droite reliant les extrémités des arcs de cercle sont à une distance comprise entre 1 et 2,5 mm, typiquement 2 mm du bord du capteur 1 d'empreinte (dimension E sur la figure 1) et ont une longueur comprise entre 2,5 et 3,5 mm, typiquement 2 mm (dimension B sur la figure 1). Cette marque 3 tactile présente une épaisseur croissante depuis les segments de droite vers le centre de la marque mais est symétrique.

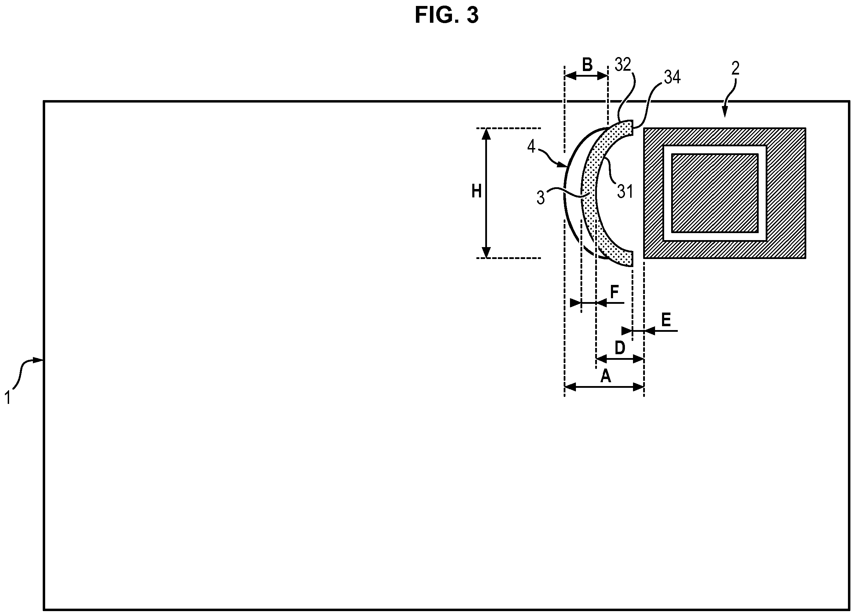

Selon un second mode de réalisation, illustré sur la **figure 3**, la marque 3 tactile est disposée de telle sorte que le doigt est correctement positionné, lorsqu'au touché, l'utilisateur commence à détecter la présence de la marque tactile.

Cette marque 3 tactile comprend deux arcs de cercle 31, 32 l'un dans l'autre connectés à leurs extrémités par deux segments de droites. Les arcs de cercle et les segments de droite délimitent la forme de la marque tactile.

Les arcs de cercles n'ont pas la même dimension. L'arc de cercle interne est inclus dans l'arc de cercle externe. Leurs extrémités sont connectées par des segments de droites 34 qui s'entendent transversalement sur la surface supérieure du corps de carte. Le milieu de l'arc de cercle interne 31 est situé entre 4 et 6 mm, typiquement 5 mm du bord du capteur d'empreinte (dimension D sur la figure 3). Les segments de droite reliant les extrémités des arcs de cercle sont à une distance comprise entre 1 et 2,5 mm, typiquement 2 mm du bord du capteur 1 d'empreinte (dimension E sur la figure 3). Cette marque 3 tactile présente une épaisseur constante comprise entre 1,5 et 2,5mm, typiquement 2 mm (dimension F sur la figure 3). La hauteur de la marque tactile est légèrement supérieure à la largeur du capteur 2 d'empreinte (dimension H sur la figure 3).

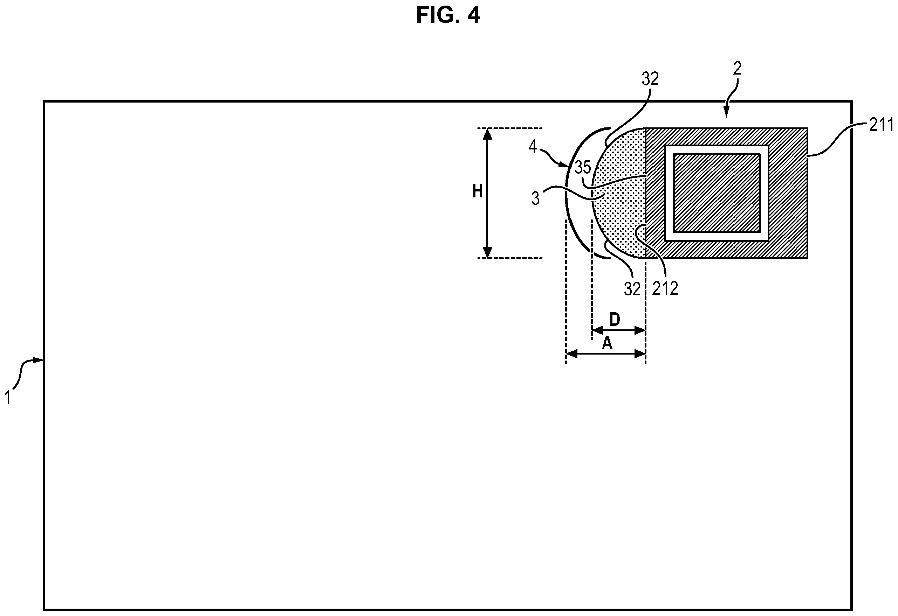

Selon un troisième mode de réalisation, illustré sur la **figure 4****,** la marque tactile 3 est disposée de telle sorte que le doigt est correctement positionné lorsqu'au touché, l'utilisateur sent la fin de la marque tactile.

En particulier, sur cette figure, la forme de la marque tactile est définie par un demi-cercle 32 fermé par un segment 35 de droite accolé au second bord 212 du capteur 2 d'empreinte. Le rayon du demi-cercle formé 32 est compris entre 4 et 6 mm, typiquement 5 mm du second bord 212 du capteur 1 d'empreinte (dimension D sur la figure 4).

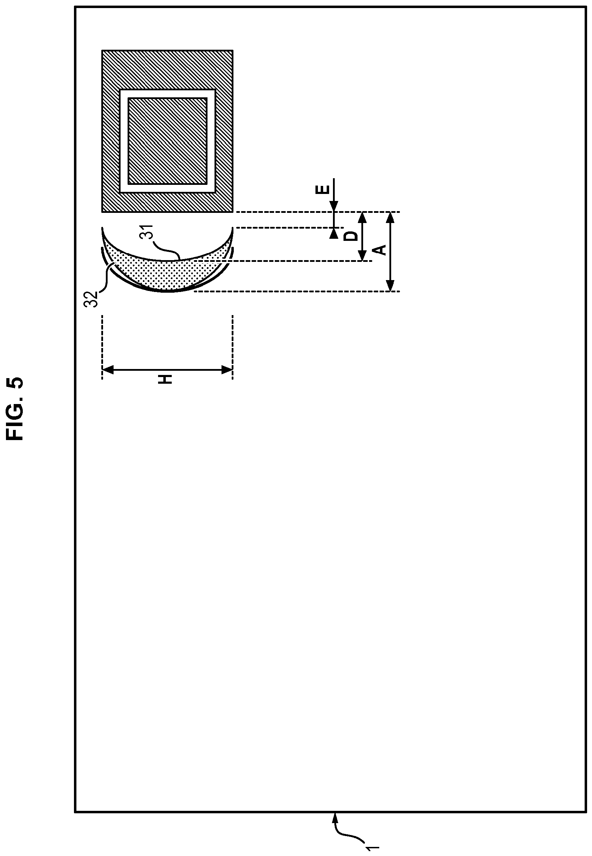

Selon un quatrième mode de réalisation, illustré sur la **figure 5****,** la marque tactile est disposée de telle sorte que le doigt est correctement positionné lorsqu'au touché, l'utilisateur commence à détecter la présence de la marque tactile.

Sur cette figure, la marque tactile 3 a la forme d'un croissant de lune plein : un arc de cercle interne 31 et un arc de cercle externe 32 joint à leurs extrémités. Le milieu de l'arc de cercle interne est à une distance comprise entre 4 et 6 mm, typiquement 5 mm du bord du capteur d'empreinte (dimension D sur la figure 5). Le milieu de l'arc de cercle externe à une distance comprise entre 9 et 11 mm, typiquement 10 mm (dimension A sur la figure 5).

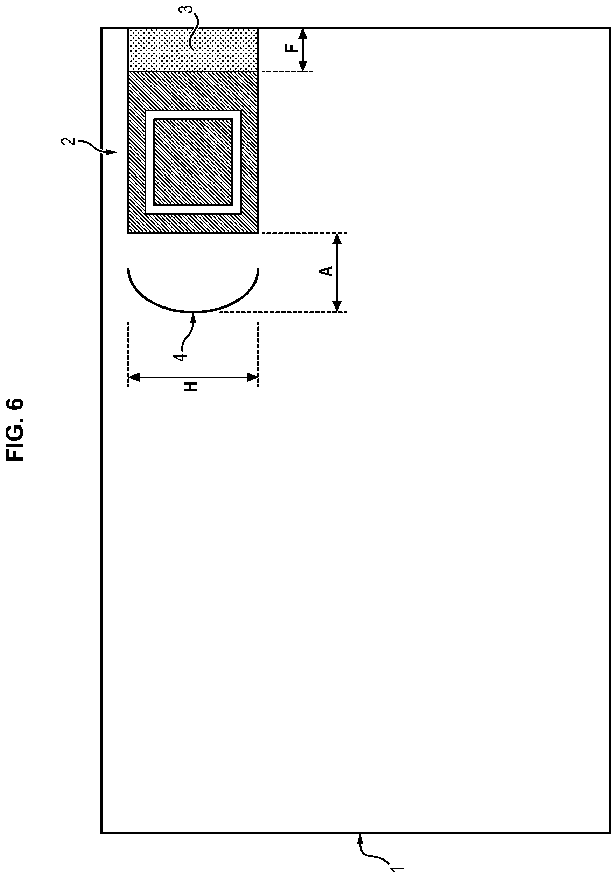

Selon un cinquième mode de réalisation, illustré sur la **figure 6****,** la marque est disposée de telle sorte que l'utilisateur, au touché, sent le premier bord du capteur 2 d'empreinte de sorte qu'il puisse mettre à plat son doigt sur le capteur 2 d'empreinte.

Sur cette figure, la marque tactile est définie par rectangle de longueur, la largeur du capteur 2 d'empreinte et de largeur s'étendant du premier bord du capteur d'empreinte jusqu'au bord du corps de carte. La largeur est comprise entre 2,8 mm et 3,5 mm, typiquement 3 mm (dimension F sur la figure 6).

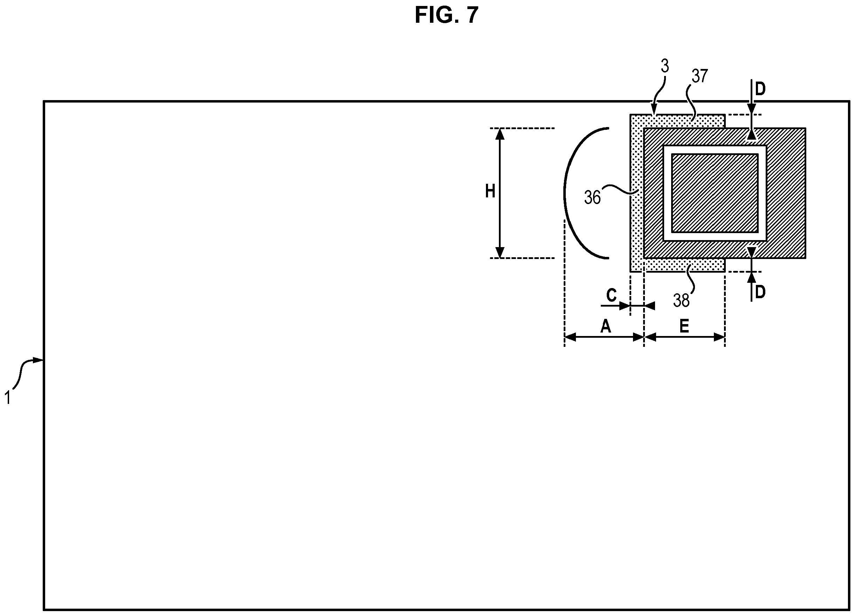

Selon un sixième mode de réalisation, illustré sur la **figure 7****,** la marque tactile est disposée de telle sorte que l'utilisateur, au touché sent le deuxième bord du capteur d'empreinte.

Selon ce mode de réalisation, la marque tactile est en forme de U qui embrasse le capteur d'empreinte. En particulier, le U embrasse le capteur depuis son deuxième bord.

La base 36 du U est telle qu'elle dépasse de part et d'autre la largeur du capteur d'empreinte de 2 mm (dimensions D sur la figure 7) et présente une largeur de 2 mm (dimensions C sur la figure 7). Les branches du U s'étendant depuis la base de U le long des bords longitudinaux du capteur d'empreinte sur une longueur comprise entre 7 et 9 mm, typiquement 8 mm (dimension E sur la figure 7).

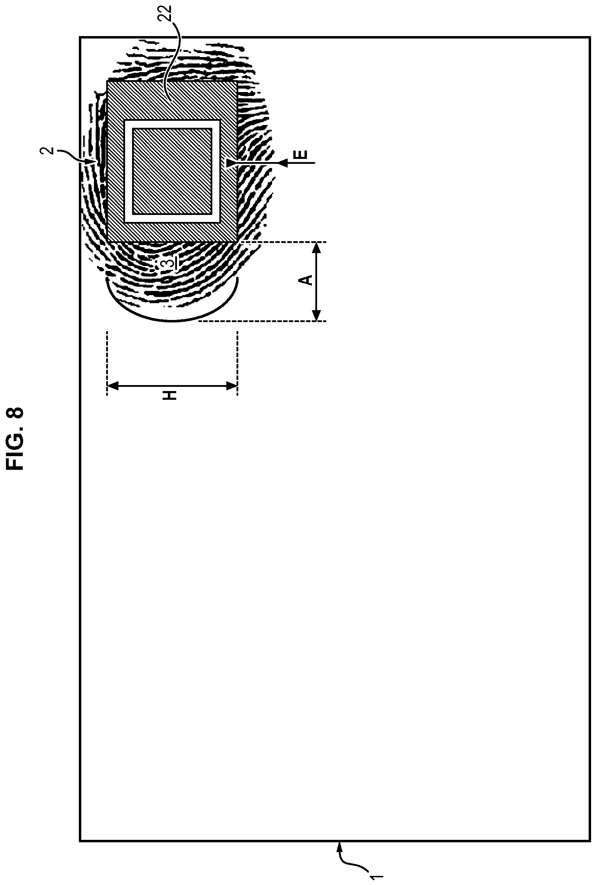

Selon un septième mode de réalisation, illustré sur la **figure 8**, la marque tactile est définie par l'image d'une empreinte digitale autour du capteur d'empreinte. Ainsi, l'utilisateur, au touché, va sentir sur toute la surface de contact la marque. La marque tactile 3 est telle que qu'elle déborde des bords du capteur d'environ 3 à 5 mm, typiquement 4 mm (dimension C sur la figure 8). L'idée est que le capteur soit inclus dans la marque tactile pour positionner correctement le doigt sur toute la surface de contact entre la carte et le doigt de l'utilisateur. Il ne s'agit pas ici de simplement indiquer la position du capteur mais d'indiquer la position complète du doigt sur le capteur.

De manière complémentaire, à chaque marque tactile des modes de réalisation ci-dessus décrit, une marque d'alignement 4 en forme d'arc de cercle est dessinée sur la surface supérieure du corps 1 de carte. La marque d'alignement est telle que le milieu de l'arc de cercle est à une distance comprise entre 9 et 11 mm, typiquement 10 mm du second bord 212 du capteur 2 d'empreinte (dimension A sur les figures).

L'ajout de la marque tactile peut se faire de différentes manières.

De manière connue en soit, un corps de carte d'une carte électronique décrite ci-dessus est obtenue par lamination à chaud de plusieurs couches la plupart en matière plastique. La surface supérieure en plastique est souvent une couche de protection transparente d'une autre couche en plastique qui supporte diverses inscriptions (visuel client, décorations diverses, identité, etc.

Les paramètres de lamination dépendent des matériaux utilisés mais peuvent varier de températures inférieures à 100°C pendant quelques secondes à des températures de plus de 180°C pendant 20 minutes à des pressions différentes. Le but de l'opération est d'obtenir une structure homogène avec une adhésion des différentes couches entre elles conforme au standard ISO7810.

Selon un premier mode de réalisation, la marque tactile est ajoutée au cours de la lamination des couches entre elles. En particulier, la marque tactile est générée en utilisant des plaques de lamination préalablement gravées.

Selon un second mode de réalisation, la marque tactile est ajoutée après la lamination des couches entre elles. En particulier, les couches laminées entre elles sont imprimées à l'aide d'un vernis tactile par sérigraphie afin d'obtenir une épaisseur suffisante pour un obtenir un toucher tout en restant dans une épaisseur conforme au standard ISO 7810

ID1. Le vernis est ajouté sur la face supérieure du corps de carte. Un tel vernis est par exemple un vernis relief ajouté avec une certaine rhéologie à l'aide d'un écran à mèche épaisse de façon à atteindre une épaisseur telle que la marque tactile ne soit pas supérieure à 50 µm. Après l'ajout du vernis, une étape de cuisson est mise en oeuvre et la marque tactile apparait en relief de la face supérieure du corps de carte.

La cuisson est thermique ou à base d'UV en fonction du vernis choisi.

Selon un troisième mode de réalisation, la marque tactile est également ajoutée après l'obtention du corps de carte. En particulier, une étape de gravure de la face supérieure du corps de carte est mise en oeuvre au moyen d'un laser. Cette étape consiste à bruler la face supérieure du corps de carte selon le motif de la marque tactile pour obtenir la marque en relief. On note que ce mode de réalisation peut générer des marques sombres et sera utilisé pour des cartes avec un visuel sombre.

## Revendications

1. Carte électronique comprenant
- un corps (1) de carte comprenant une surface (11) supérieure et une surface (12) inférieure ;
- un capteur (2) d'empreinte affleurant la surface supérieure dudit corps de carte, le capteur (2) d'empreinte étant configuré pour acquérir une image d'une empreinte d'un utilisateur lorsqu'un doigt de l'utilisateur est posé sur une partie active (21) du capteur (2) d'empreinte ;
- la carte électronique étant **caractérisée en ce qu'**elle comprend:
une marque tactile (3) disposée sur la surface supérieure du corps de carte à proximité du capteur d'empreinte, ladite marque tactile ayant une surépaisseur depuis la surface supérieure de la carte pour guider, au touché de ladite marque, un positionnent correct d'un doigt sur la partie active (21) dudit capteur empreinte, l'épaisseur de la marque tactile étant telle que la carte présente une épaisseur compatible du standard ISO 7810 ID1, l'épaisseur de la marque tactile étant comprise entre 30 et 60 µm, typiquement 50 µm.

2. Carte électronique selon la revendication 1, dans laquelle la marque tactile est définie par deux arcs de cercle l'un dans l'autre joints à leurs extrémités par des segments de droite.

3. Carte électronique selon l'une des revendications 1 à 2, dans laquelle la marque tactile est en forme de croissant de lune.

4. Carte électronique selon l'une des revendication 1 à 3, dans laquelle la marque tactile est définie par un demi-cercle accolé au capteur d'empreinte.

5. Carte électronique selon l'une des revendications 1 à 4, dans laquelle la marque tactile est définie par un U englobant le capteur d'empreinte.

6. Carte électronique selon l'une des revendications 1 à 4, dans laquelle la marque tactile est définie par l'image d'une empreinte digitale disposée autour du capteur (2) d'empreinte.

7. Carte électronique selon l'une des revendications précédentes, comprenant en outre une marque d'alignement visible à l'œil nu définissant une position de l'extrémité du doigt de l'utilisateur sur la surface supérieure du corps de carte, la marque d'alignement étant typiquement un arc de cercle ouvert vers le capteur d'empreinte.

8. Carte électronique selon l'une des revendications précédentes, dans laquelle le corps de carte ayant été obtenu par lamination de plusieurs couches entre elles, la marque tactile étant obtenue par impression d'un vernis sur la surface supérieure du corps de carte, au moyen d'un procédé de sérigraphie suivit par une étape de cuisson du corps de carte et de la marque tactile

9. Carte électronique selon l'une des revendications précédentes, dans laquelle le corps de carte ayant été obtenu par lamination de plusieurs couches entre elles, la marque tactile étant ajoutée par gravure, au moyen d'un laser, de la surface supérieure du corps de carte.

10. Carte électronique selon l'une des revendications précédentes, dans laquelle la marque tactile est obtenue simultanément au corps de carte par lamination de plusieurs couches entre elles entre, des plaques de lamination étant gravées du motif définissant la marque tactile.

## Patentansprüche

1. Elektronische Karte, umfassend
- einen Kartenkörper (1), der eine obere Fläche (11) und eine untere Fläche (12) umfasst;
- einen Fingerabdrucksensor (2), der mit der oberen Fläche des Kartenkörpers bündig ist, wobei der Fingerabdrucksensor (2) ausgelegt ist, um ein Bild eines Fingerabdrucks eines Benutzers zu erfassen, wenn ein Finger des Benutzers auf einem aktiven Teil (21) des Fingerabdrucksensors (2) liegt;
wobei die elektronische Karte **dadurch gekennzeichnet ist, dass** sie umfasst:
- eine taktile Markierung (3), die auf der oberen Fläche des Kartenkörpers in der Nähe des Fingerabdrucksensors angeordnet ist, wobei die taktile Markierung eine Überdicke ab der oberen Fläche der Karte hat, um bei Berührung der Markierung eine korrekte Positionierung eines Fingers auf dem aktiven Teil (21) des Fingerabdrucksensors zu führen, wobei die Dicke der taktilen Markierung derart ist, dass die Karte eine Dicke aufweist, die mit dem Standard ISO 7810 ID1 kompatibel ist, wobei die Dicke der taktilen Markierung zwischen 30 und 60 µm liegt, typischerweise 50 µm beträgt.

2. Elektronische Karte nach Anspruch 1, wobei die taktile Markierung von zwei ineinanderliegenden Kreisbögen definiert ist, die an ihren Enden durch Segmente einer Geraden verbunden sind.

3. Elektronische Karte nach einem der Ansprüche 1 bis 2, wobei die taktile Markierung halbmondförmig ist.

4. Elektronische Karte nach einem der Ansprüche 1 bis 3, wobei die taktile Markierung von einem am Fingerabdrucksensor anliegenden Halbkreis definiert ist.

5. Elektronische Karte nach einem der Ansprüche 1 bis 4, wobei die taktile Markierung von einem U definiert ist, das den Fingerabdrucksensor einschließt.

6. Elektronische Karte nach einem der Ansprüche 1 bis 4, wobei die taktile Markierung von dem Bild eines digitalen Fingerabdrucks definiert ist, das um den Fingerabdrucksensor (2) angeordnet ist.

7. Elektronische Karte nach einem der vorangehenden Ansprüche, umfassend ferner eine mit dem bloßen Auge sichtbare Ausrichtungsmarkierung, die eine Position des Endes des Fingers des Benutzers auf der oberen Fläche des Kartenkörpers definiert, wobei die Ausrichtungsmarkierung in typischer Weise ein in Richtung des Fingerabdrucksensors offener Kreisbogen ist.

8. Elektronische Karte nach einem der vorangehenden Ansprüche, wobei der Kartenkörper durch Laminieren mehrerer Schichten miteinander erhalten wurde, wobei die taktile Markierung durch Drucken eines Lacks auf die obere Fläche des Kartenkörpers mittels eines Siebdruckverfahrens, gefolgt von einem Brennverfahren des Kartenkörpers und der taktilen Markierung, erhalten wird.

9. Elektronische Karte nach einem der vorangehenden Ansprüche, wobei der Kartenkörper durch Laminieren mehrerer Schichten miteinander erhalten wurde, wobei die taktile Markierung durch Gravieren der oberen Fläche des Kartenkörpers mittels eines Lasers erhalten wird.

10. Elektronische Karte nach einem der vorangehenden Ansprüche, wobei die taktile Markierung gleichzeitig mit dem Kartenkörper durch Laminieren mehrerer Schichten miteinander erhalten wird, wobei Laminierungsplatten mit dem Motiv graviert sind, das die taktile Markierung definiert.

## Claims

1. An electronic card comprising:
- a card body (1) comprising an upper surface (11) and a lower surface (12);
- a fingerprint sensor (2) flush with the upper surface of said card body, the fingerprint sensor (2) bring configured to acquire an image of a fingerprint of a user when a finger of the user rests on an active part (21) of the fingerprint sensor (2);
the electronic card being **characterized in that** it comprises:
- a tactile mark (3) placed on the upper surface of the card body near the fingerprint sensor, said tactile mark having an excess thickness from the upper surface of the card to guide, when said mark is touched, a correct positioning of a finger on the active part (21) of said fingerprint sensor, the thickness of the tactile mark being such that the card has a thickness compatible with standard ISO 7810 ID1, the thickness of the tactile mark being between 30 and 60 µm, typically 50 µm.

2. The electronic card according to claim 1, wherein the tactile mark is defined by two arcs of a circle in each other joined at their ends by line segments.

3. The electronic card according to any of claims 1 to 2, wherein the tactile mark is in the form of a crescent moon.

4. The electronic card according any of claims 1 to 3, wherein the tactile mark is defined by a semicircle adjoining the fingerprint sensor.

5. The electronic card according to any of claims 1 to 4, wherein the tactile mark is defined by a U encompassing the fingerprint sensor.

6. The electronic card according to any of claims 1 to 4, wherein the tactile mark is defined by the image of a fingerprint placed around the fingerprint sensor (2) .

7. The electronic card according to any of the preceding claims, also comprising an alignment mark visible to the naked eye defining a position of the fingertip of the user on the upper surface of the card body, the alignment mark being typically an arc of a circle open towards the fingerprint sensor.

8. The electronic card according to any of the preceding claims, wherein the card body having been obtained by lamination of several layers together, the tactile mark being obtained by printing of a varnish on the upper surface of the card body, by means of a screen printing process followed by a curing step of the card body and of the tactile mark.

9. The electronic card according to any of the preceding claims, wherein once the card body having been obtained by lamination of several layers together, the tactile mark being added by etching, by means of a laser, of the upper surface of the card body.

10. The electronic card according to any of the preceding claims, wherein the tactile mark is obtained simultaneously with the card body by lamination of several layers together, lamination plates being etched with the pattern defining the tactile mark.
